# EUROPEAN PATENT APPLICATION

(11) **EP 4 811 162 A1**
(43) Date of publication of application: **23.09.2026**
(21) Application number: 23961954.7
(22) Date of filing: 22.12.2023
(51) Int. Cl.: G06F 16/332

(54) **DATA PROCESSING METHOD AND APPARATUS BASED ON LARGE LANGUAGE MODEL, AND DEVICE**

(71) Applicant: New H3C Technologies Co., Ltd., Hangzhou, Zhejiang 310052 (CN)
(72) Inventor: WANG, Minghui, Beijing 100102 (CN)
(74) Representative: 2SPL Patentanwälte PartG mbB
(86) International application number: PCT/CN2023/140974
(87) International publication number: WO 2025/129623

(57) **Abstract**

The present application provides a data processing method and apparatus based on a large language model, and a device. The method comprises: obtaining an original input question, and determining a target feature corresponding to the original input question; selecting a target branch model corresponding to the target feature from among all branch models; inputting the original input question to a basic model, so as to obtain an intermediate processing feature corresponding to the original input question and an output processing feature corresponding to the original input question; and sending a trigger instruction to the target branch model, so that the target branch model obtains the intermediate processing feature and the output processing feature from the basic model on the basis of the trigger instruction, processes the intermediate processing feature so as to obtain a branch processing feature corresponding to the original input question, and processes the branch processing feature and the output processing feature so as to obtain a target answer corresponding to the original input question. The technical solution of the present application saves computing resources of a server and time overhead, and thus a target answer can be quickly determined.

## Description

### TECHNICAL FIELD

The present disclosure relates to the field of artificial intelligence technology, and in particular to a data processing method, apparatus and device based on a Large Language Model (LLM).

### BACKGROUND

With the rapid development of network technology, there is an increasing amount of network data. To retrieve data required by a user from a large amount of network data, keywords (i.e., original input question) need to be provided by the user. A server retrieves the data required by the user from a large amount of network data based on the keywords.

However, due to the large amount of network data, the server needs to consume a lot of computing resources to retrieve data required by a user and spend a lot of time, which leads to a large consumption of server resources, and the user cannot obtain required data in time.

For example, cameras deployed in an actual scenario, after capturing a large number of images, transmits these images to a server. In order to analyze data required by a user from these images, the server needs to consume a lot of computing resources and spend a large amount of time.

### SUMMARY

In view of this, the present disclosure provides a data processing method, apparatus and device based on a large language model, which can save server computing resources of a server and time overhead, and can quickly determine a target answer.

The present disclosure provides a data processing method based on a large language model. A target large language model includes a base model and at least two ladder models, and the method includes:
obtaining an original input question and determining one or more target features corresponding to the original input question;
selecting a target ladder model corresponding to the one or more target features from all ladder models;
inputting the original input question into the base model to obtain one or more intermediate processing features corresponding to the original input question and an output processing feature corresponding to the original input question; and
sending a trigger instruction to the target ladder model, so that the target ladder model obtains the one or more intermediate processing features and the output processing feature from the base model based on the trigger instruction, processes the one or more intermediate processing features to obtain one or more ladder processing features corresponding to the original input question, and processes the one or more ladder processing features and the output processing feature to obtain a target answer corresponding to the original input question.

The present disclosure provides a data processing apparatus based on a large language model. A target large language model includes a base model and at least two ladder models, and the apparatus includes:
an obtaining module, configured to obtain an original input question and determine one or more target features corresponding to the original input question, and select a target ladder model corresponding to the one or more target features from all ladder models; and
a processing module, configured to input the original input question into the base model to obtain one or more intermediate processing features corresponding to the original input question and an output processing feature corresponding to the original input question; and
send a trigger instruction to the target ladder model, so that the target ladder model obtains the one or more intermediate processing features and the output processing feature from the base model based on the trigger instruction, processes the one or more intermediate processing features to obtain one or more ladder processing features corresponding to the original input question, and processes the one or more ladder processing features and the output processing feature to obtain a target answer corresponding to the original input question.

The present disclosure provides an electronic device, including a processor and a machine readable storage medium, where the machine readable storage medium stores machine executable instructions executable by the processor, and the processor is configured to execute the machine executable instructions to implement the above data processing method based on a large language model.

It can be seen from the above technical solution that in the embodiment of the present disclosure, the target large language model includes a base model and at least two ladder models. For example, the at least two ladder models can be ladder models for different industries. After obtaining the original input question, the target ladder model can be selected from all the ladder models, and the target answer corresponding to the original input question can be determined based on the base model and the target ladder model. In this way, for original input questions of different industries, target answers can be determined based on ladder models corresponding to different industries, thereby obtaining accurate target answers. For example, for an original input question of an industry A, a target answer is determined based on a ladder model corresponding to the industry A; for an original input question of an industry B, a target answer is determined based on a ladder model corresponding to the industry B, and so on. In this way, accurate target answers can be obtained for the original input questions of different industries.

The target answer can be obtained by means of the target large language model, and the target answer can be queried only by consuming a small amount of computing resources. It takes less time to obtain the target answer, thereby saving computing resources of the server and time overhead. The target answer corresponding to the original input question can be quickly determined, logical analysis and reasoning capabilities are provided, and an accurate and reliable target answer is given by using the analysis capability of the target large language model.

### BRIEF DESCRIPTION OF THE DRAWINGS

To more clearly illustrate the technical solution in embodiments of the present disclosure or in the prior art, accompanying drawings required in the description of the embodiments of the present disclosure or the prior art will be briefly introduced below. Apparently, the drawings described below are only some examples recorded in the present disclosure. For those skilled in the art, other drawings can be obtained based on these drawings of the embodiments of the present disclosure.
FIG. 1 is a schematic flowchart of a data processing method based on a large language model in an embodiment.
FIG. 2A is a schematic structural diagram of a large language model in an embodiment.
FIG. 2B is a schematic structural diagram of an industry large language model in an embodiment.
FIG. 3 is a schematic structural diagram of a target large language model in an embodiment.
FIG. 4 is a schematic diagram of a training process for a target large language model in an embodiment.
FIGs. 5A, 5B, and 5C are schematic structural diagrams of an industry large language model in an embodiment.
FIG. 6 is a schematic diagram of a data processing process based on a target large language model in an embodiment.
FIG. 7 is a schematic structural diagram of a large language model in an embodiment.
FIG. 8 is a schematic structural diagram of a data processing apparatus based on a large language model in an embodiment.
FIG. 9 is a hardware structure diagram of an electronic device in an embodiment.

### DETAILED DESCRIPTION OF THE EMBODIMENTS

Terms used in the embodiments of the present disclosure are for the purpose of describing specific embodiments only, and are not intended to limit the present disclosure. The singular forms "a" ("an"), "the" and "this" used in the embodiments of the present disclosure and the appended claims are also intended to include plural forms, unless the context clearly indicates other meanings. It should also be understood that the term "and/or" as used herein refers to any or all possible combinations including one or more of associated listed items.

It should be understood that although terms first, second, third, etc. may be used in the embodiments of the present disclosure to describe various information, such information should not be limited to these terms. These terms are only used to distinguish the same type of information from each other. For example, first information may also be referred to as second information, and similarly, the second information may also be referred to as the first information without departing from the scope of the present disclosure. Depending on the context, the word "if" as used herein can be interpreted as "at the time of", "when" or "in response to determining".

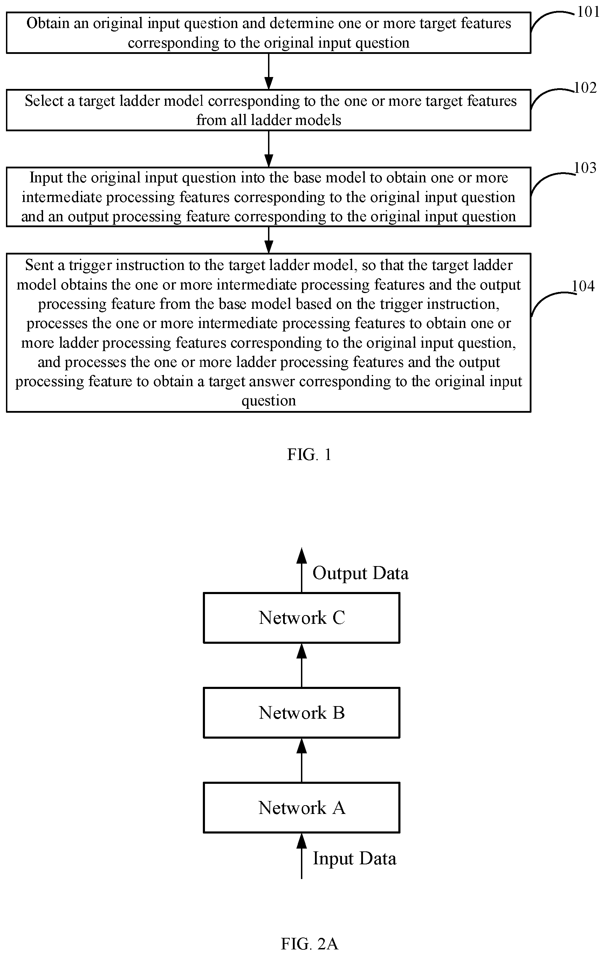

An embodiment of the present disclosure proposes a data processing method based on a large language model, which can be applied to any electronic device, such as a server. In an embodiment, a target large language model can include a base model and at least two ladder models. Referring to FIG. 1, the method can include steps 101 to 104.

In step 101: an original input question is obtained and one or more target features corresponding to the original input question are determined.

In step 102: a target ladder model corresponding to the one or more target features is selected from all ladder models.

In step 103: the original input question is input into the base model to obtain one or more intermediate processing features corresponding to the original input question and an output processing feature corresponding to the original input question.

In step 104: a trigger instruction is sent to the target ladder model, so that the target ladder model obtains the one or more intermediate processing features and the output processing feature from the base model based on the trigger instruction, processes the one or more intermediate processing features to obtain one or more ladder processing features corresponding to the original input question, and processes the one or more ladder processing features and the output processing feature to obtain a target answer corresponding to the original input question.

In an embodiment, for each ladder model, the ladder model can be a model for an industry, and different ladder models are for different industries.

Selecting the target ladder model corresponding to the one or more target features from all ladder models can include but is not limited to: if the one or more target features include a target industry to which the original input question belongs, selecting a ladder model corresponding to the target industry from all ladder models as the target ladder model.

In an example, for each ladder model, the ladder model can be a model for an industry, and different ladder models are for different industries.

Selecting the target ladder model corresponding to the one or more target features from all ladder models can include but is not limited to: obtaining a session identifier corresponding to the original input question; where, when a connection is established between a user equipment and the target large language model, a session identifier can be assigned to the user equipment, and the session identifier is synchronously provided every time the user equipment provides an original input question to the target large language model;
if there is a ladder model corresponding to the session identifier, determining the ladder model corresponding to the session identifier as the target ladder model corresponding to the original input question;
if there is no ladder model corresponding to the session identifier, and the one or more target features include a target industry to which the original input question belongs, selecting a ladder model corresponding to the target industry from all ladder models as the target ladder model, and recording a corresponding relationship between the session identifier and the target ladder model.

In an example, a process of determining the target industry corresponding to the original input question can include but is not limited to: obtaining one or more target keywords corresponding to the original input question, querying an industry dictionary to obtain the target industry corresponding to the one or more target keywords; where the industry dictionary includes a mapping relationship between keywords and industries; or
inputting the original input question into an industry identification model to obtain the target industry corresponding to the original input question; where the industry identification model is configured to identify industries.

In an example, for each ladder model, the ladder model can be a model for a language, and different ladder models are for different languages.

Determining the one or more target features corresponding to the original input question can include but is not limited to: if the one or more target features include a target language corresponding to the original input question, performing word segmentation on the original input question to obtain a plurality of tokens, and determining the target language corresponding to the original input question based on the plurality of tokens.

Selecting the target ladder model corresponding to the one or more target features from all ladder models can include but is not limited to: selecting a ladder model corresponding to the target language from all ladder models as the target ladder model.

In an example, a training process for the target large language model can include but is not limited to the following steps.

Training is performed based on sample data corresponding to the base model to obtain the base model.

For each ladder model to be trained, a side connecting between the base model and the ladder model to be trained is performed to obtain an industry model. Based on sample data corresponding to the ladder model to be trained, the ladder model to be trained is trained to obtain a trained ladder model. During the training process, network parameters of the ladder model to be trained are adjusted to obtain the trained ladder model, and network parameters of the base model are not adjusted.

After obtaining a trained ladder model corresponding to each ladder model to be trained, a side connecting between the base model and all trained ladder models is performed to obtain the target large language model.

In an example, the above execution order is only for the convenience of describing the given examples. In practical application, the execution order between steps can also be changed, and there is no limitation on the execution order. Moreover, in other embodiments, steps of the corresponding method are not necessarily executed in the order shown and described in this specification, and the method may include more or less steps than those described in this specification. In addition, a single step described in this specification may be decomposed into multiple steps for description in other embodiments. The steps described in this specification may be combined into a single step in other embodiments.

It can be seen from the above technical solution that in the embodiment of the present disclosure, the target large language model includes a base model and at least two ladder models. For example, the at least two ladder models can be ladder models for different industries. After obtaining the original input question, the target ladder model can be selected from all the ladder models, and the target answer corresponding to the original input question can be determined based on the base model and the target ladder model. In this way, for original input questions of different industries, target answers can be determined based on ladder models corresponding to different industries, thereby obtaining accurate target answers. For example, for an original input question of an industry A, a target answer is determined based on a ladder model corresponding to the industry A; for an original input question of an industry B, a target answer is determined based on a ladder model corresponding to the industry B, and so on. In this way, accurate target answers can be obtained for the original input questions of different industries.

The target answer can be obtained by means of the target large language model, and the target answer can be queried only by consuming a small amount of computing resources. It takes less time to obtain the target answer, thereby saving computing resources of the server and time overhead. The target answer corresponding to the original input question can be quickly determined, logical analysis and reasoning capabilities are provided, and an accurate and reliable target answer is given by using the analysis capability of the target large language model.

The above technical solution in the embodiments of the present disclosure will be described below in combination with specific application scenarios.

Due to the large amount of network data (for example, text data, video data, speech data, image data, etc.), the server needs to consume a lot of computing resources to retrieve the data required by a user and needs to spend a lot of time, resulting in a lot of resource consumption by the server, and it takes a long time for the user to obtain the required data. For example, in a practical scenario, a large number of cameras will be deployed, these cameras will collect a large number of images. In order to analyze data required by a user from these images, a lot of computing resources needs to be consumed and a large amount of time will be spent.

In view of the above findings, the data can be analyzed by means of a Large Language Model (LLM). For example, question data is input into the large language model, and a target answer is output by the large language model. In this way, it only needs to consume a small amount of computing resources to query the target answer corresponding to the question data from a large amount of data. It takes less time to obtain the target answer, thereby saving computing resources of the server and time overhead, and an accurate and reliable target answer is given by using the analysis capability of the large language model.

For example, ChatGPT is a large language model based on natural language processing and machine learning, and can simulate human language communication and realize intelligent dialogue with users. ChatGPT has been widely applied in fields like intelligent customer service, chatbots, voice assistants, etc., providing people with more convenient, fast, and intelligent services. Based on this, ChatGPT can be used to analyze the data and obtain the target answer corresponding to the question data.

With the rapid development of artificial intelligence, based on the large language model, industries will use industry data to perform fine-tuning training on the large language model and obtain a new large language model. The new large language model can also be referred to as industry large language model or expert large language model (taking the industry large language model as an example later). For example, for the communication industry, the large language model can be fine-tuning trained with data of the communication industry and an industry large language model for the communication industry can be obtained. For the medical industry, the large language model can be fine-tuning trained with data of the medical industry and an industry large language model for the medical industry can be obtained. For the education industry, the large language model can be fine-tuning trained with data of the education industry and an industry large language model for the education industry can be obtained.

However, due to a large number of network parameters of the large language model, even if a small number of network parameters (such as network parameters for communication industry, medical industry, education industry) are added for the large language model, a large number of network parameters need to be adjusted when the large language model is fine-tuning trained. It takes a lot of time and computing resources to complete the fine-tuning training of the large language model, leading to considerable resource consumption.

For example, as shown in FIG. 2A, which is a schematic structural diagram of a large language model. The large language model can include a network A, a network B and a network C. The network A, the network B and the network C can all include a large number of network parameters, such as trillions of network parameters. After training the large language model, various industries can also use industry data to perform fine-tuning training on the large language model, thus obtaining industry large language models.

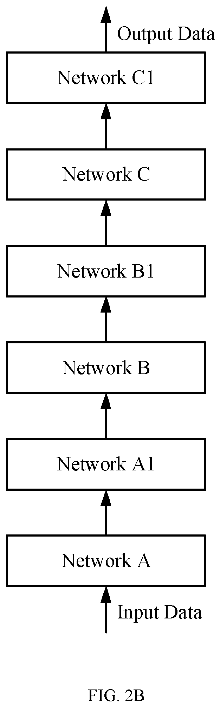

For example, as shown in FIG. 2B, which is a schematic structural diagram of an industry large language model. On the basis of the large language model, the industry large language model is additionally added with a network A1, a network B1 and a network C1. The network A1, the network B1 and the network C1 all include a small number of network parameters, such as tens or hundreds of network parameters.

When the large language model is fine-tuning trained with industry data, network parameters of the network A, the network B, the network C, the network A1, the network B1 and the network C1 need to be adjusted in a gradient backhaul process. Although the network A1, the network B1 and the network C1 have a relatively small number of network parameters, the network A, the network B, the network C have many network parameters, such as trillions of network parameters. Thus, in the fine-tuning training process, a lot of time and a lot of computing resources need to be consumed to complete the fine-tuning training of the large language model.

In view of the above findings, the present disclosure provides a data processing method based on a large language model, which can adjust the large language model by using ladder models. A plurality of industries can adopt the same large language model.

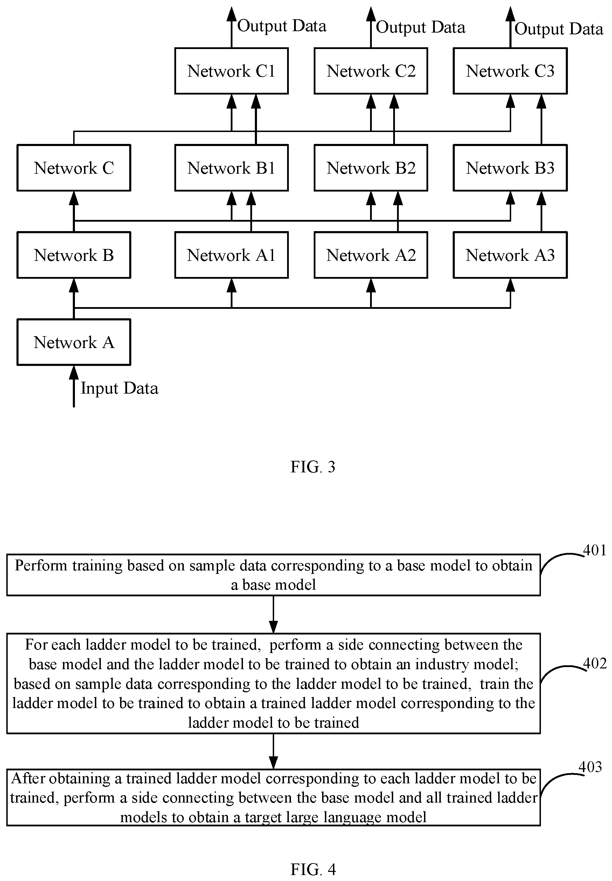

For example, as shown in FIG. 3, FIG. 3 is a schematic structural diagram of a target large language model. Based on a large language model, the target large language model is additionally added with a ladder model 1, a ladder model 2, and a ladder model 3. Three ladder models are taken as examples herein, and the number of ladder models can be more or less.

In FIG. 3, the large language model can include a network A, a network B and a network C. The large language model can be referred to as a base model. That is, the base model includes the network A, the network B and the network C.

The ladder model 1 can include a network A1, a network B1 and a network C1. For example, the ladder model 1 can be a ladder model for the communication industry, and the base model and the ladder model 1 can form an industry large language model for the communication industry. When the large language model is fine-tuning trained with industry data of the communication industry, in a gradient backhaul process, only network parameters of the network A1, the network B1 and the network C1 need to be adjusted, without the need to adjust network parameters of the network A, the network B and the network C. Obviously, because the network parameters of the network A1, the network B1 and the network C1 are relatively few, the fine-tuning training process only needs to consume a small amount of time and a small amount of computing resources, so that fine-tuning training of the large language model can be completed quickly and computing resources can be saved.

The ladder model 2 can include a network A2, a network B2 and a network C2. For example, the ladder model 2 can be a ladder model for the medical industry, and the base model and the ladder model 2 can form an industry large language model for the medical industry. When the large language model is fine-tuning trained with industry data of the medical industry, in a gradient backhaul process, only network parameters of the network A2, the network B2 and the network C2 need to be adjusted, without the need to adjust network parameters of the network A, the network B and the network C. The fine-tuning training process only needs to consume a small amount of time and a small amount of computing resources, thus fine-tuning training can be completed quickly and computing resources can be saved.

The ladder model 3 can include a network A3, a network B3 and a network C3. For example, the ladder model 3 can be a ladder model for the education industry, and the base model and the ladder model 3 can form an industry large language model for the education industry. When the large language model is fine-tuning trained with industry data of the education industry, in a gradient backhaul process, only network parameters of the network A3, the network B3 and the network C3 need to be adjusted, without the need to adjust network parameters of the network A, the network B and the network C. The fine-tuning training process only needs to consume a small amount of time and a small amount of computing resources, thus fine-tuning training can be completed quickly and computing resources can be saved.

In an example, a training process of a target large language model and a data processing process based on the target large language model can be involved. In the training process of the target large language model, the target large language model can be obtained by training. The target large language model can include a base model and at least two ladder models. In the data processing process based on the target large language model, the original input question can be inputted into the target large language model, and a target answer corresponding to the original input question can be output by the target large language model. The training process of the target large language model and the data processing process based on the target large language model are described below.

Firstly, for the training process of the target large language model, for example, as shown in FIG. 4, FIG. 4 is a schematic diagram of a training process for a target large language model. The process can include steps 401 to 403.

In step 401, training is performed based on sample data corresponding to a base model to obtain a base model.

For example, the structure of the base model (i.e., the large language model) can be seen in FIG. 2A. The base model can include a network A, a network B and a network C, and the structure of the base model is not limited. The network A can be a Transformer structure or other structure, the network B can be a Transformer structure or other structure, and the network C can be a Transformer structure or other structure.

For example, sample data corresponding to a base model (such as a large amount of sample data) can be obtained, and the base model can be obtained by training the sample data, and the training process of the base model is not limited.

In step 402, for each ladder model to be trained, a side connecting between the base model and the ladder model to be trained is performed to obtain an industry model (i.e., an industry large language model); based on sample data corresponding to the ladder model to be trained, the ladder model to be trained is trained to obtain a trained ladder model corresponding to the ladder model to be trained.

In an embodiment, during the training process of the ladder model to be trained, network parameters of the ladder model to be trained are adjusted to obtain the trained ladder model, and network parameters of the base model are not adjusted.

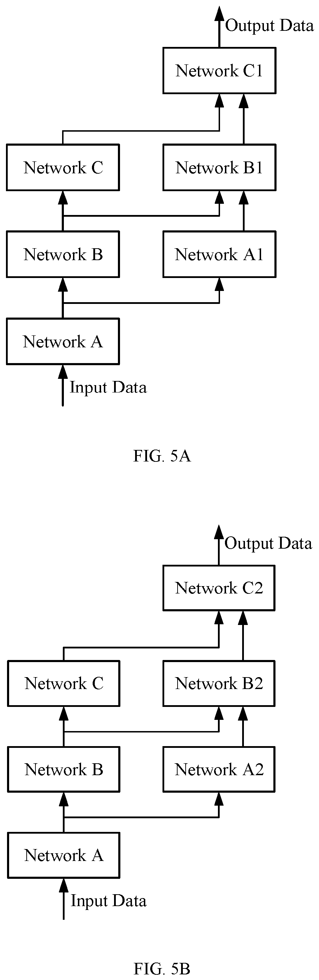

For example, for a ladder model to be trained for communication industry, the ladder model to be trained includes a network A1, a network B1 and a network C1, and a side connecting between the base model and the ladder model to be trained is performed to obtain an industry large language model for the communication industry. As shown in FIG. 5A, FIG. 5A is a schematic structural diagram of an industry large language model.

On this basis, the industry large language model can be trained based on the sample data corresponding to the ladder model to be trained (i.e., industry data of the communication industry) to obtain the trained ladder model corresponding to the ladder model to be trained (denoted as a ladder model 1). In the training process, only network parameters of the ladder model to be trained (that is, network parameters of the network A1, the network B1 and the network C1) are adjusted to obtain the ladder model 1, and network parameters of the base model are not adjusted, and the training process is not limited.

For example, for a ladder model to be trained for medical industry, the ladder model to be trained includes a network A2, a network B2 and a network C2, and a side connecting between the base model and the ladder model to be trained is performed to obtain an industry large language model for the medical industry. As shown in FIG. 5B, FIG. 5B is a schematic structural diagram of an industry large language model.

On this basis, the industry large language model can be trained based on industry data of the medical industry to obtain a trained ladder model 2. In the training process, only network parameters of the network A2, the network B2 and the network C2 are adjusted to obtain the ladder model 2, and network parameters of the base model are not adjusted.

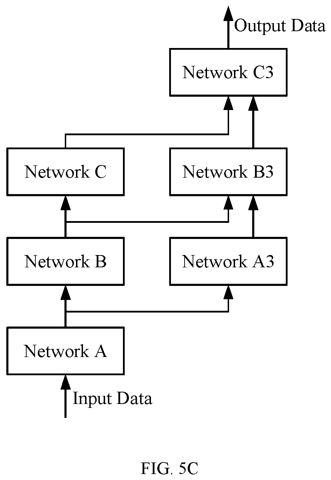

For example, for a ladder model to be trained for education industry, the ladder model to be trained includes a network A3, a network B3 and a network C3, and a side connecting between the base model and the ladder model to be trained is performed to obtain an industry large language model for the education industry. As shown in FIG. 5C, FIG. 5C is a schematic structural diagram of an industry large language model.

On this basis, the industry large language model can be trained based on industry data of the education industry to obtain a trained ladder model 3. In the training process, only network parameters of the network A3, the network B3 and the network C3 are adjusted to obtain the ladder model 3, and network parameters of the base model are not adjusted.

In step 403, after obtaining a trained ladder model corresponding to each ladder model to be trained, a side connecting between the base model and all trained ladder models is performed to obtain a target large language model.

For example, a side connecting between the base model and the ladder model 1, the ladder model 2, and the ladder model 3 is performed to obtain a target large language model. That is, the target large language model includes the ladder model 1, the ladder model 2 and the ladder model 3. As shown in FIG. 3, FIG. 3 is a schematic structural diagram of a target large language model.

In an example, the target large language model is constructed by adding ladder models to a base model, with part of output of the base model serving as input of the ladder models. All network parameters to be trained are located in the ladder models. Since the base model only provides the input, the complexity of backpropagation depends on the scale of the ladder models, eliminating the need for direct backpropagation on the base model, which can obviously improve the training efficiency.

For example, since the number of network parameters of each ladder model is relatively small compared to the base model, it will not increase many network parameters compared with the base model. Therefore, when training the ladder model (that is, adjusting the network parameters of the ladder model), the training efficiency is high, the occupation of memory is small, and few computing resources are occupied. The training can be completed quickly, fast and low-cost expansion of model capabilities can be effectively achieved, and model performance can be enhanced.

In an example, after the base model is obtained, and a ladder model for a specific industry is trained, a side connecting between the ladder model and the base model is performed to obtain an industry large language model for the industry. The industry large language model can be represented as a base model plus an appended ladder model, and the industry large language model corresponds to tasks related to the industry. The industry large language model can be divided into two parts: the ladder model and the base model. The industry large language model can be denoted as: Model = Base + Ladder.

In an example, a side connecting between the base model and ladder models for a plurality of industries is performed to obtain a target large language model. That is, the target large language model includes a plurality of industry large language models. The target large language model includes a base model and a plurality of ladder models, each ladder model corresponding to an industry large language model.

For example, an industry large language model 1 can be denoted as Base+Ladder¹, an industry large language model 2 can be denoted as Base+Ladder², and so on. Obviously, the Base is consistent across various industry large language models. A side connecting among these industry large language models is performed, a target large language model supporting a plurality of industries can be achieved.

In an embodiment, for each network in the ladder models (such as the network A1, the network B1, the network C1, the network A2, the network B2, the network C2, the network A3, the network B3, the network C3), the network can be a Transformer structure (e.g., a lightweight Transformer structure, "lightweight" means that the Transformer structure has a relatively small number of network parameters) or other structure, which is not limited.

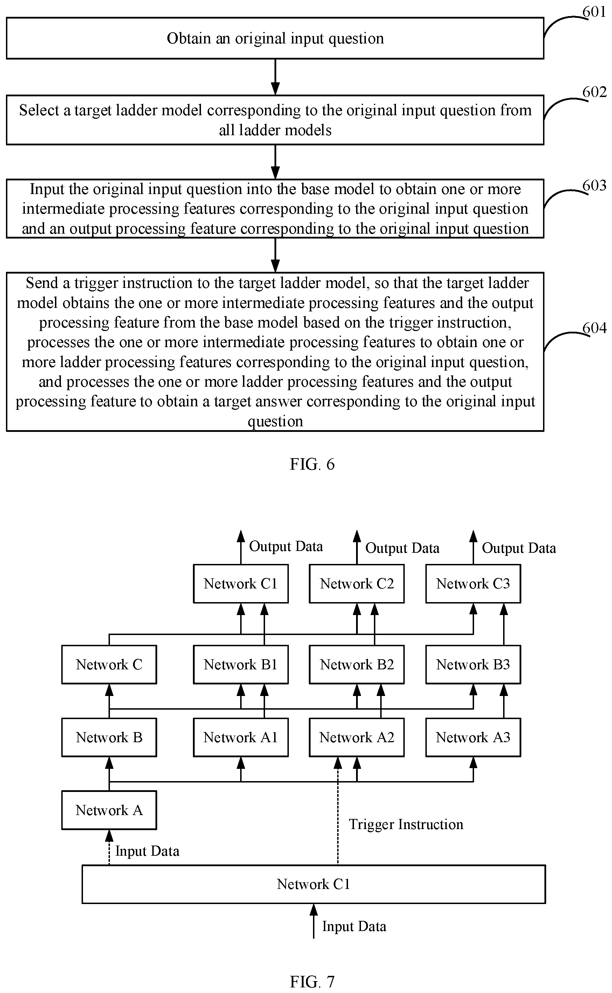

Secondly, for the data processing process based on the target large language model, for example, as shown in FIG. 6, FIG. 6 is a schematic diagram of a data processing process based on a target large language model. The process can include steps 601 to 604:

In step 601, an original input question is obtained. For example, an original input question input by a user can be received, or the original input question can be obtained in other ways, which is not limited.

In an example, the original input question can be an input question in an image data format, or an input question in a text data format, or an input question in a speech data format, or an input question in a video data format. The data format of the original input question is not limited.

In step 602, a target ladder model corresponding to the original input question is selected from all ladder models. For example, one or more target features corresponding to the original input question can be determined, and a target ladder model corresponding to the one or more target features is selected from all ladder models as the target ladder model corresponding to the original input question.

In an example, the target large language model can include a Gating module (also referred to as a Gating network). That is, an entrance to the target large language model has a Gating module. The Gating module is configured to obtain the original input question and select a target ladder model corresponding to the original input question from all ladder models. For example, as shown in FIG. 7, the entrance to the target large language model has a Gating module.

In an example, in order to select the target ladder model from all ladder models, the following manners can be adopted.

Manner 1: the target large language model includes at least two ladder models. For each ladder model, the ladder model can be a model for an industry, and different ladder models are models for different industries. For example, as shown in FIG. 3, the ladder model 1 is a ladder model for the communication industry, the ladder model 2 is a ladder model for the medical industry, and the ladder model 3 is a ladder model for the education industry.

On this basis, a target industry to which the original input question belongs (that is, one or more target features corresponding to the original input question include the target industry to which the original input question belongs) can be determined, and a ladder model corresponding to the target industry is selected from all ladder models as the target ladder model. For example, if the target industry corresponding to the original input question is the communication industry, the ladder model 1 is taken as the target ladder model. If the target industry corresponding to the original input question is the medical industry, the ladder model 2 is taken as the target ladder model. If the target industry corresponding to the original input question is the education industry, the ladder model 3 is taken as the target ladder model.

In an example, to obtain the ladder model corresponding to the target industry, a mapping relationship between industries and ladder models can be pre-configured. Based on this, after obtaining the target industry corresponding to the original input question, the ladder model corresponding to the target industry is obtained by querying the mapping relationship.

In an example, to determine the target industry corresponding to the original input question, an industry dictionary can be pre-configured. The industry dictionary includes a mapping relationship between keywords and industries, and there is no limitation on this industry dictionary.

One or more target keywords corresponding to the original input question can be obtained.

For example, if the original input question is in text format, word segmentation is performed on the original input question to obtain a plurality of words. A certain word can be taken the target keywords, or a part of the plurality of words can be taken as the target keywords, and there is no limitation on the selection manner of the target keywords.

For another example, if the original input question is in image format, one or more target keywords can be extracted from the image. For example, an image can be input into a keyword extraction model to obtain target keywords, and an image algorithm can also be used to analyze the image to obtain the target keywords, which is not limited.

For another example, if the original input question is in speech format, one or more target keywords can be extracted from the speech, and there is no limitation on the extraction manner of the target keywords. If the original input question is in video format, one or more target keywords can be extracted from the video, and there is no limitation on the extraction manner.

After obtaining the target keywords, the industry dictionary can be queried through the target keywords to obtain the target industry corresponding to the target keywords, and a ladder model corresponding to the target industry is taken as the target ladder model.

In an example, to determine the target industry corresponding to the original input question, an industry identification model can be pre-trained. The industry identification model is configured to identify industries. The network structure and training process of the industry identification model are not limited, so long as the industry identification model can identify industries.

After obtaining the original input question, the original input question can be input into the industry identification model. The industry identification model can perform processing based on the original input question to obtain and output the target industry corresponding to the original input question. In this way, the target industry corresponding to the original input question can be obtained, and the ladder model corresponding to the target industry can be taken as the target ladder model.

Manner 2: the target large language model includes at least two ladder models. For each ladder model, the ladder model can be a model for an industry, and different ladder models are models for different industries.

On this basis, a session identifier corresponding to the original input question can be obtained. For example, when a connection is established between a user equipment (i.e., user) and the target large language model, the target large language model can assign a session identifier to the user equipment. The session identifier is synchronously provided every time the user equipment provides an original input question to the target large language model. That is, all original input questions will carry the session identifier, and the session identifier of each original input question is the same. In this way, when the original input question is obtained, the session identifier corresponding to the original input question can also be obtained, and analysis can be performed based on the session identifier.

If there is no ladder model corresponding to the session identifier (for example, for a first original input question inputted by the user equipment to the target large language model, there is no ladder model corresponding to the session identifier), a target industry to which the original input question belongs (that is, one or more target features corresponding to the original input question include the target industry to which the original input question belongs) is determined. A ladder model corresponding to the target industry is selected from all ladder models as the target ladder model, and a corresponding relationship between the session identifier and the target ladder model is recorded.

For example, if there is no ladder model corresponding to the session identifier, the target ladder model can be determined by manner 1, and this process will not be repeated. After obtaining the target ladder model, a corresponding relationship between the session identifier and the target ladder model can be recorded for subsequent querying of this corresponding relationship.

If there is a ladder model corresponding to the session identifier (for example, for a non-first original input question inputted by the user equipment to the target large language model, there is a ladder model corresponding to the session identifier, that is, a corresponding relationship between the session identifier and the ladder model is recorded when the first original input question occurs), the ladder model corresponding to the session identifier can be directly determined as the target ladder model corresponding to the original input question.

Manner 3: the target large language model includes at least two ladder models. For each ladder model, the ladder model can be a model for a language, and different ladder models are models for different languages.

For example, when training the target large language model, a ladder model 1 is a ladder model for a language A (i.e., the ladder model 1 is trained with sample data of the language A), a ladder model 2 is a ladder model for a language B (i.e., the ladder model 2 is trained with sample data of the language B), and a ladder model 3 is a ladder model for a language C (i.e., the ladder model 3 is trained with sample data of the language C).

On this basis, word segmentation can be performed on the original input question to obtain a plurality of tokens. For example, if the original input question is in text format, the original input question can be divided into small blocks, which are called tokens. This process is referred to as word segmentation, that is, a plurality of tokens can be obtained.

Based on the plurality of tokens, a target language corresponding to the original input question can be determined (i.e., one or more target features corresponding to the original input question include the target language corresponding to the original input question). For example, each token is analyzed to obtain the language of the token, and the language of the token is taken as the target language corresponding to the original input question.

A ladder model corresponding to the target language is selected from all ladder models as the target ladder model. For example, if the target language is the language A, the ladder model 1 is selected as the target ladder model, and so forth.

In an example, to obtain the ladder model corresponding to the target language, a mapping relationship between languages and ladder models can also be pre-configured. Based on this, after obtaining the target language corresponding to the original input question, the ladder model corresponding to the target language can be obtained by querying the mapping relationship.

Manner 4: the target large language model includes at least two ladder models. For each ladder model, the ladder model can be a model for a language, and different ladder models are models for different languages.

On this basis, a session identifier corresponding to the original input question can be obtained. If there is no ladder model corresponding to the session identifier, word segmentation can be performed on the original input question to obtain a plurality of tokens. Based on the plurality of tokens, a target language corresponding to the original input question can be determined. A ladder model corresponding to the target language can be selected from all ladder models as the target ladder model, and a corresponding relationship between the session identifier and the target ladder model can be recorded. If there is a ladder model corresponding to the session identifier, the ladder model corresponding to the session identifier can be directly determined as the target ladder model corresponding to the original input question.

The manners are only examples of selecting the target ladder model from all ladder models, and there is no limitation on this.

In step 603, the original input question is input into the base model to obtain one or more intermediate processing features corresponding to the original input question and an output processing feature corresponding to the original input question.

In step 604, a trigger instruction is sent to the target ladder model, so that the target ladder model obtains the one or more intermediate processing features and the output processing feature from the base model based on the trigger instruction, processes the one or more intermediate processing features to obtain one or more ladder processing features corresponding to the original input question, and processes the one or more ladder processing features and the output processing feature to obtain a target answer corresponding to the original input question.

For example, as shown in FIG. 7, the Gating module can input the original input question into the base model and send a trigger instruction to the target ladder model (e.g., ladder model 2). The trigger instruction is configured to trigger the target ladder model to perform the reasoning process. Other ladder models will not perform the reasoning process.

For example, the trigger instruction may be the original input question, that is, by inputting the original input question to the target ladder model, the target ladder model is triggered to perform the reasoning process. Or, the trigger instruction may be a message, that is, by inputting the message to the target ladder model, the target ladder model is triggered to perform the reasoning process.

For example, for step 603, the original input question can be processed through the base model to obtain the intermediate processing features corresponding to the original input question and the output processing feature corresponding to the original input question.

For example, as shown in FIG. 7, upon obtaining the original input question, the network A of the base model performs processing based on the original input question to obtain an intermediate processing feature X1, and inputs the intermediate processing feature X1 to the network B. After obtaining the intermediate processing feature X1, the network B performs processing based on the intermediate processing feature X1 to obtain an intermediate processing feature X2, and inputs the intermediate processing feature X2 to the network C. After obtaining the intermediate processing feature X2, the network C performs processing based on the intermediate processing feature X2 to obtain an output processing feature X3.

For step 604, after receiving the trigger instruction, the target ladder model obtains the intermediate processing features and the output processing feature from the base model, processes the intermediate processing features to obtain the ladder processing features corresponding to the original input question, and processes the ladder processing features and the output processing feature to obtain the target answer corresponding to the original input question.

For example, after receiving the trigger instruction, the target ladder model (e.g., ladder model 2) is triggered to perform the reasoning process. During the reasoning process, the network A2 of the ladder model 2 obtains an output feature of the network A (i.e., the intermediate processing feature X1). For example, the network A may store the intermediate processing feature X1 in a cache, and the network A2 can read the intermediate processing feature X1 from the cache.

The network A2 processes the intermediate processing feature X1 to obtain a ladder processing feature Y1, and inputs the ladder processing feature Y1 to the network B2. The network B2 obtains an output feature (i.e., the intermediate processing feature X2) of the network B, fuses the intermediate processing feature X2 and the ladder processing feature Y1, performs processing based on the fused feature to obtain a ladder processing feature Y2, and inputs the ladder processing feature Y2 to the network C2.

The network C2 obtains an output feature (i.e., the output processing feature X3) of the network C, fuses the output processing feature X3 and the ladder processing feature Y2, performs processing based on the fused feature to obtain a ladder processing feature Y2, and performs processing based on the fused feature to obtain the target answer.

Obviously, the target answer is the target answer corresponding to the original input question, which can be output.

It can be seen from the above technical solution that in the embodiments of the present disclosure, for original input questions of different industries, target answers can be determined based on ladder models corresponding to different industries, thereby obtaining accurate target answers. The target answer can be obtained by means of the target large language model, and the target answer can be queried only by consuming a small amount of computing resources. It takes less time to obtain the target answer, thereby saving computing resources of the server and time overhead. The target answer corresponding to the original input question can be quickly determined, logical analysis and reasoning capabilities are provided, and an accurate and reliable target answer is given by using the analysis capability of the target large language model.

Based on the same invention concept, a data processing apparatus based on a large language model and an electronic device corresponding to the above data processing method based on a large language model are also provided. Since the principle of solving problems by the data processing apparatus and the electronic device is similar to that of solving problems by the data processing method based on the large language model, the implementation of the data processing apparatus and the electronic device can refer to the data processing method based on the large language model, and repetitions are not elaborated herein.

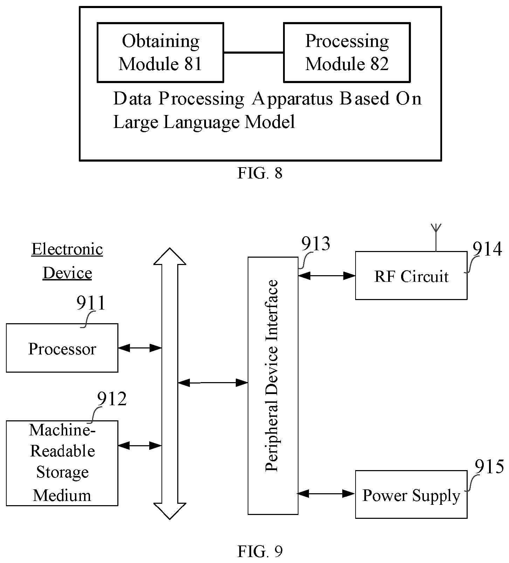

Based on the same application concept as the above method, an embodiment of the present disclosure proposes a data processing apparatus based on a large language model. A target large language model can include a base model and at least two ladder models. FIG. 8 is a schematic structural diagram of the apparatus. The apparatus includes an obtaining module 81 and a processing module 82.

The obtaining module 81 is configured to obtain an original input question and determine one or more target features corresponding to the original input question, and select a target ladder model corresponding to the one or more target features from all ladder models.

The processing module 82 is configured to input the original input question into the base model to obtain one or more intermediate processing features corresponding to the original input question and an output processing feature corresponding to the original input question; and
send a trigger instruction to the target ladder model, so that the target ladder model obtains the one or more intermediate processing features and the output processing feature from the base model based on the trigger instruction, processes the one or more intermediate processing features to obtain one or more ladder processing features corresponding to the original input question, and processes the one or more ladder processing features and the output processing feature to obtain a target answer corresponding to the original input question.
when selecting the target ladder model corresponding to the one or more target features from all ladder models, the obtaining module 81 is specifically configured to: if the one or more target features include a target industry to which the original input question belongs, select a ladder model corresponding to the target industry from all ladder models as the target ladder model.

In an example, when selecting the target ladder model corresponding to the one or more target features from all ladder models, the obtaining module 81 is specifically configured to:
obtain a session identifier corresponding to the original input question; where, when a connection is established between a user equipment and the target large language model, a session identifier is assigned to the user equipment, and the session identifier is synchronously provided every time the user equipment provides an original input question to the target large language model;
if there is a ladder model corresponding to the session identifier, determine the ladder model corresponding to the session identifier as the target ladder model corresponding to the original input question;
if there is no ladder model corresponding to the session identifier, and the one or more target features include a target industry to which the original input question belongs, select a ladder model corresponding to the target industry from all ladder models as the target ladder model, and record a corresponding relationship between the session identifier and the target ladder model.

In an example, when determining the target industry to which the original input question belongs, the obtaining module 81 is specifically configured to: obtain one or more target keywords corresponding to the original input question, querying an industry dictionary to obtain the target industry corresponding to the one or more target keywords; where the industry dictionary includes a mapping relationship between keywords and industries; or input the original input question into an industry identification model to obtain the target industry corresponding to the original input question; where the industry identification model is configured to identify industries.

In an example, when determining the one or more target features corresponding to the original input question, the obtaining module 81 is specifically configured to: if the one or more target features include a target language corresponding to the original input question, perform word segmentation on the original input question to obtain a plurality of tokens, and determine the target language corresponding to the original input question based on the plurality of tokens;
where when selecting the target ladder model corresponding to the one or more target features from all ladder models, the obtaining module 81 is specifically configured to: select a ladder model corresponding to the target language from all ladder models as the target ladder model.

In an example, the apparatus further includes: a training module, configured to train to obtain the target large language model; where when training to obtain the target large language model, the training module is specifically configured to:
train based on sample data corresponding to the base model to obtain the base model; for each ladder model to be trained, perform a side connecting between the base model and the ladder model to be trained to obtain an industry model;
based on sample data corresponding to the ladder model to be trained, train the ladder model to be trained to obtain a trained ladder model; where, during a training process, network parameters of the ladder model to be trained are adjusted to obtain the trained ladder model, and network parameters of the base model are not adjusted;
after obtaining a trained ladder model corresponding to each ladder model to be trained, perform a side connecting between the base model and all trained ladder models to obtain the target large language model.

Based on the same concept as the above method, an embodiment of the present disclosure proposes an electronic device. As shown in FIG. 9, the electronic device includes a processor 911 and a machine readable storage medium 912. The machine readable storage medium 912 stores machine-executable instructions that can be executed by the processor 911. The processor 911 is configured to execute the machine-executable instructions to implement the data processing method based on a large language model disclosed in the above examples.

In an example, the processor 911 can include one or more processing cores, such as a 4-core processor, an 8-core processor. The processor 911 can be implemented in at least one hardware form among Digital Signal Processing (DSP), Field-Programmable Gate Array (FPGA), Programmable Logic Array (PLA).

The processor 911 can also include a main processor and a co-processor. The main processor is a processor for processing data in a wake-up state, also referred to as Central Processing Unit (CPU). The co-processor is a low-power processor for processing data in a standby state.

In some embodiments, the processor 911 can be integrated with a Graphics Processing Unit (GPU), which is used for rendering and drawing the contents to be displayed on a display screen.

In an example, the electronic device may optionally include a peripheral device interface 913 and at least one peripheral device. The processor 911 can be connected to the peripheral device interface 913 by a bus or signal lines. Various peripheral devices can be connected to the peripheral device interface 913 by buses, signal lines, or circuit boards. The peripheral devices can include at least one of a radio frequency (RF) circuit 914 and a power supply 915.

The RF circuit 914 is configured to receive and transmit RF signals, also referred to as electromagnetic signals. The RF circuit 914 communicates with communication networks and other communication devices through electromagnetic signals. The RF circuit 914 converts electrical signals into electromagnetic signals for transmission, or converts received electromagnetic signals into electrical signals. Optionally, the RF circuit 914 may include an antenna system, an RF transceiver, one or more amplifiers, a tuner, an oscillator, a digital signal processor, a user identity module card, etc.

The RF circuit 914 can communicate with user equipment through at least one wireless communication protocol. The wireless communication protocol includes but not limited to: World Wide Web, metropolitan area network, intranet, various generations of mobile communication networks (2G, 3G, 4G, and 5G), wireless local area network, and/or Wireless Fidelity (WiFi) network.

The power supply 915 is used to supply power to various components in the electronic device. The power supply 915 can be alternating current (AC), direct current (DC), a disposable battery, or a rechargeable battery.

Based on the same application concept as the above method, an embodiment of the present disclosure also provides a machine readable storage medium storing a number of computer instructions. When executed by a processor, the computer instructions can implement the data processing method based on a large language model disclosed in the above examples of the present disclosure.

The above machine readable storage medium can be any electronic, magnetic, optical, or other physical storage device that can contain or store information, such as executable instructions, data. For example, the machine readable storage medium can be a Random Access Memory (RAM), a volatile memory, a non-volatile memory, a flash memory, a storage drives (such as a hard disk drive), a solid-state drive, any type of storage disk (such as optical disk, DVD), or similar storage medium, or a combination thereof.

The systems, devices, modules, or units described in the above examples can be implemented by a computing entity or by products with certain functions. A typical implementation device can be a computer. The specific form of the computer can be a personal computer, a laptop computer, a cellular phone, a camera phone, a smart phone, a personal digital assistant, a media player, a navigation device, an email receiving and sending device, a game console, a tablet computer, a wearable device or a combination of any of these devices.

For convenience of description, the above apparatus is divided into various units in terms of function and is described separately. In implementing the present disclosure, the functions of various units can be implemented in the same or multiple software and/or hardware.

The persons skilled in the art should understand that the examples of the present disclosure can be provided as a method, a system, or a computer program product. Thus, entire hardware examples, entire software examples or examples combining software and hardware can be adopted in the present disclosure. Further, the examples of the present disclosure can be implemented in the form of a computer program product that is operated on one or more computer available storage media (including but not limited to magnetic disk memory, CD-ROM, and optical memory and so on) including computer available program codes.

The present disclosure is described by referring to flowcharts and/or block diagrams of a method, a device (a system) and a computer program product in examples of the present disclosure. It is understood that each flowchart and/or block in the flowcharts and/or the block diagrams or a combination of a flow chart and/or a block of the flowcharts and/or the block diagrams can be implemented by computer program instructions. These computer program instructions can be provided to a general-purpose computer, a dedicated computer, an embedded processor, or a processor of another programmable data processing device to generate a machine so that the instructions executable by a computer or a processor of another programmable data processing device generate an apparatus for implementing functions designated in one or more flows of the flowcharts and/or one or more blocks of the block diagrams.

Further, these computer program instructions can also be stored in a computer readable memory that can direct a computer or another programmable data processing device to work in a particular manner so that the instructions stored in the computer readable memory generate a product including an instruction apparatus and the instruction apparatus can implement functions designated in one or more flows of the flowcharts and/or one or more blocks of the block diagrams.

The computer program instructions can also be loaded on a computer or another programmable data processing device, so that a series of operation steps can be executed on the computer or another programmable device to generate processing achieved by the computer, and thus instructions executable on the computer or another programmable device are provided for steps for realizing functions designated in one or more flows of the flowcharts and/or one or more blocks of the block diagrams.

The foregoing descriptions are made to embodiments of the present disclosure but not intended to limit the present disclosure. For those skilled in the art, various modifications and variations can be made to the present disclosure. Any modifications, equivalent substitutions and improvements made within the spirit and principle of the present disclosure shall all fall within the scope of protection of the present disclosure.

## Claims

1. A data processing method based on a large language model, wherein a target large language model comprises a base model and at least two ladder models, and the method comprises:
obtaining an original input question and determining one or more target features corresponding to the original input question;
selecting a target ladder model corresponding to the one or more target features from all ladder models;
inputting the original input question into the base model to obtain one or more intermediate processing features corresponding to the original input question and an output processing feature corresponding to the original input question; and
sending a trigger instruction to the target ladder model, so that the target ladder model obtains the one or more intermediate processing features and the output processing feature from the base model based on the trigger instruction, processes the one or more intermediate processing features to obtain one or more ladder processing features corresponding to the original input question, and processes the one or more ladder processing features and the output processing feature to obtain a target answer corresponding to the original input question.

2. The method according to claim 1, wherein selecting the target ladder model corresponding to the one or more target features from all ladder models comprises:
if the one or more target features comprise a target industry to which the original input question belongs, selecting a ladder model corresponding to the target industry from all ladder models as the target ladder model.

3. The method according to claim 1, wherein selecting the target ladder model corresponding to the one or more target features from all ladder models comprises:
obtaining a session identifier corresponding to the original input question; wherein, when a connection is established between a user equipment and the target large language model, a session identifier is assigned to the user equipment, and the session identifier is synchronously provided every time the user equipment provides an original input question to the target large language model;
if there is a ladder model corresponding to the session identifier, determining the ladder model corresponding to the session identifier as the target ladder model corresponding to the original input question;
if there is no ladder model corresponding to the session identifier, and the one or more target features comprise a target industry to which the original input question belongs, selecting a ladder model corresponding to the target industry from all ladder models as the target ladder model, and recording a corresponding relationship between the session identifier and the target ladder model.

4. The method according to claim 2 or 3, wherein the target industry to which the original input question belongs is determined by:
obtaining one or more target keywords corresponding to the original input question, querying an industry dictionary to obtain the target industry corresponding to the one or more target keywords; wherein the industry dictionary comprises a mapping relationship between keywords and industries; or
inputting the original input question into an industry identification model to obtain the target industry corresponding to the original input question; wherein the industry identification model is configured to identify industries.

5. The method according to claim 1, wherein determining the one or more target features corresponding to the original input question comprises:
if the one or more target features comprise a target language corresponding to the original input question, performing word segmentation on the original input question to obtain a plurality of tokens, and determining the target language corresponding to the original input question based on the plurality of tokens;
wherein selecting the target ladder model corresponding to the one or more target features from all ladder models comprises:
selecting a ladder model corresponding to the target language from all ladder models as the target ladder model.

6. The method according to claim 1, wherein a training process for the target large language model comprises:
training based on sample data corresponding to the base model to obtain the base model;
for each ladder model to be trained,
performing a side connecting between the base model and the ladder model to be trained to obtain an industry model;
based on sample data corresponding to the ladder model to be trained, training the ladder model to be trained to obtain a trained ladder model; wherein, during a training process, network parameters of the ladder model to be trained are adjusted to obtain the trained ladder model, and network parameters of the base model are not adjusted;
after obtaining a trained ladder model corresponding to each ladder model to be trained, performing a side connecting between the base model and all trained ladder models to obtain the target large language model.

7. A data processing apparatus based on a large language model, wherein a target large language model comprises a base model and at least two ladder models, and the apparatus comprises:
an obtaining module, configured to obtain an original input question and determine one or more target features corresponding to the original input question, and select a target ladder model corresponding to the one or more target features from all ladder models; and
a processing module, configured to input the original input question into the base model to obtain one or more intermediate processing features corresponding to the original input question and an output processing feature corresponding to the original input question; and
send a trigger instruction to the target ladder model, so that the target ladder model obtains the one or more intermediate processing features and the output processing feature from the base model based on the trigger instruction, processes the one or more intermediate processing features to obtain one or more ladder processing features corresponding to the original input question, and processes the one or more ladder processing features and the output processing feature to obtain a target answer corresponding to the original input question.

8. The apparatus according to claim 7, wherein when selecting the target ladder model corresponding to the one or more target features from all ladder models, the obtaining module is specifically configured to:
if the one or more target features comprise a target industry to which the original input question belongs, select a ladder model corresponding to the target industry from all ladder models as the target ladder model.

9. The apparatus according to claim 7, wherein when selecting the target ladder model corresponding to the one or more target features from all ladder models, the obtaining module is specifically configured to:
obtain a session identifier corresponding to the original input question; wherein, when a connection is established between a user equipment and the target large language model, a session identifier is assigned to the user equipment, and the session identifier is synchronously provided every time the user equipment provides an original input question to the target large language model;
if there is a ladder model corresponding to the session identifier, determine the ladder model corresponding to the session identifier as the target ladder model corresponding to the original input question;
if there is no ladder model corresponding to the session identifier, and the one or more target features comprise a target industry to which the original input question belongs, select a ladder model corresponding to the target industry from all ladder models as the target ladder model, and record a corresponding relationship between the session identifier and the target ladder model.

10. The apparatus according to claim 8 or 9, wherein when determining the target industry to which the original input question belongs, the obtaining module is specifically configured to:
obtain one or more target keywords corresponding to the original input question, querying an industry dictionary to obtain the target industry corresponding to the one or more target keywords; wherein the industry dictionary comprises a mapping relationship between keywords and industries; or
input the original input question into an industry identification model to obtain the target industry corresponding to the original input question; wherein the industry identification model is configured to identify industries.

11. The apparatus according to claim 7, wherein when determining the one or more target features corresponding to the original input question, the obtaining module is specifically configured to:
if the one or more target features comprise a target language corresponding to the original input question, perform word segmentation on the original input question to obtain a plurality of tokens, and determine the target language corresponding to the original input question based on the plurality of tokens;
wherein when selecting the target ladder model corresponding to the one or more target features from all ladder models, the obtaining module is specifically configured to:
select a ladder model corresponding to the target language from all ladder models as the target ladder model.

12. The apparatus according to claim 7, further comprising:
a training module, configured to train to obtain the target large language model;
wherein when training to obtain the target large language model, the training module is specifically configured to:
train based on sample data corresponding to the base model to obtain the base model;
for each ladder model to be trained,
perform a side connecting between the base model and the ladder model to be trained to obtain an industry model;
based on sample data corresponding to the ladder model to be trained, train the ladder model to be trained to obtain a trained ladder model; wherein, during a training process, network parameters of the ladder model to be trained are adjusted to obtain the trained ladder model, and network parameters of the base model are not adjusted;
after obtaining a trained ladder model corresponding to each ladder model to be trained, perform a side connecting between the base model and all trained ladder models to obtain the target large language model.

13. An electronic device, comprising a processor and a machine readable storage medium, wherein the machine readable storage medium stores machine executable instructions executable by the processor, and the processor is configured to execute the machine executable instructions to implement the method according to any one of claims 1-6.
